# EUROPÄISCHE PATENTSCHRIFT

(11) **EP 1 580 765 B1**
(45) Veröffentlichungstag und Bekanntmachung des Hinweises auf die Patenterteilung: **26.03.2008**
(21) Anmeldenummer: 05006638.0
(22) Anmeldetag: 24.03.2005
(51) Int. Cl.: G21K 1/02, G01V 5/00, G01N 23/201

(54) **Sekundärkollimator für eine Röntgenstreuvorrichtung sowie Röntgenstreuvorrichtung**
Secondary collimator for an X-ray scattering apparatus and X-ray scattering apparatus
Collimateur secondaire pour dispositif à rayons X diffusés et dispositif à rayons X diffusés

(30) Priorität: 24.03.2004 DE 102004014445
(43) Veröffentlichungstag der Anmeldung: 28.09.2005
(73) Patentinhaber: GE Homeland Protection, Inc., Newark, CA 94560 (US)
(72) Erfinder: Harding, Geoffrey, 22547 Hamburg (DE); Strecker, Helmut, 22589 Hamburg (DE); Olesinki, Stephan, 20249 Hamburg (DE); Kosciesza, Dirk, 25421 Pinneberg (DE)
(74) Vertreter: DTS München

(56) Entgegenhaltungen:
- EP-A- 1 347 287
- US-A- 4 057 726
- US-A- 4 956 856
- US-A- 5 065 418
- US-A- 5 293 417
- US-A- 5 787 145
- US-A- 5 949 850
- US-A- 6 122 344
- US-A- 6 151 381
- PATENT ABSTRACTS OF JAPAN Bd. 008, Nr. 141 (P-283), 30. Juni 1984 (1984-06-30) -& JP 59 040284 A (SHIMAZU SEISAKUSHO KK), 5. März 1984 (1984-03-05)
- HARDING G ET AL: "Coherent X-ray scatter imaging and its applications in biomedical science and industry" RADIATION PHYSICS AND CHEMISTRY, ELSEVIER SCIENCE PUBLISHERS BV., AMSTERDAM, NL, Bd. 56, Nr. 1-2, 11. August 1999 (1999-08-11), Seiten 229-245, XP004179936 ISSN: 0969-806X

## Beschreibung

Die Erfindung betrifft einen Sekundärkollimator für eine Röntgenstreuvorrichtung sowie eine Röntgenstreuvorrichtung zur Gepäckkontrolle.

Es sind Röntgenstreuvorrichtungen (XRD) gemäß der US 5,394,453 bekannt. Bei solchen Vorrichtungen wird eine Gepäckkontrolle mittels eines Fächerstrahls vorgenommen. Der Fächerstrahl wird durch einen primären Spaltkollimator erhalten, der lediglich einen schmalen Strahl der Primärstrahlung einer Elektronen-Bremsstrahlungs-Quelle hindurchtreten lässt. Ein zu untersuchendes Gepäckstück wird von dem Fächerstrahl getroffen. Die von einem zu untersuchenden Bereich des Gepäckstücks gestreute Strahlung wird über einen Sekundärkollimator auf ein Detektorfeld abgebildet. Der Detektor "sieht" somit durch den Sekundärkollimator einen bestimmten, räumlich festgelegten Bereich des zu untersuchenden Gepäckstücks (Tomographie). Bei einer solchen Vorrichtung ist es jedoch schon bei Gepäckstücken mittlerer Größe nötig, ein Detektorfeld großen Ausmaßes zu verwenden. Aufgrund der Vergrößerung (regelmäßig ein Faktor 2) des zu untersuchenden Gepäckstücks auf das Detektorfeld, sind bereits für 80 cm breite Gepäckstücke Detektorfelder mit einer Breite von circa 1,80 m nötig. Zwar kann ein solches Detektorfeld fest in einem Halterahmen montiert sein und somit eine mechanische Verformung aufgrund des Gewichts des Detektorfeldes und der Temperatur gut kontrolliert werden. Der in der US 5,394,453 beschriebene Sekundärkollimator ist allerdings selbsttragend, was zu mechanischen Ungenauigkeiten führt und somit auch mit Ungenauigkeiten in den damit gemessenen XRD-Profilen einhergeht, wenn das zu untersuchende Gepäckstück eine gewisse Breite überschreitet.

Darüber hinaus ist es bekannt, Gepäckstücke mittels eines Kegelstrahls abzutasten. Dafür ist jedoch eine Scanvorrichtung nötig, mittels der das zu untersuchende Gepäckstück in einem einzigen Scanvorgang durchleuchtet wird. Allerdings ist der Durchsatz an zu prüfenden Gepäckstücken bei einer solchen Vorrichtung sehr gering, da ein Vorscannen mittels einer Computertomographie erfolgen muss.

Aus der US 4,956,856 ist ein Sekundärkollimator für eine Röntgenstreuvorrichtung bekannt, der horizontale Lamellen und senkrecht dazu angeordnete vertikale Lamellen aufweist. Die vertikalen Lamellen sind parallel zueinander angeordnet und um einen vorgebbaren Streuwinkel zu einer Transmissionsrichtung eines Röntgenstrahls geneigt. Dagegen sind die horizontalen Lamellen fächerförmig auf die Röntgenquelle hin ausgerichtet. Die horizontalen und vertikalen Lamellen bilden zusammen ein rechteckiges Gitter und sind in einer Kollimatoreinheit zusammengefasst.

US 4,057,726 offenbart einen Kollimator aus gebogenen Bleiblech-Streiten.

Aufgabe der Erfindung ist es deswegen, einen stabilen und steifen Streukollimator zu erhalten, der zu einem hochgradig präzisen XRD-Profil des zu überprüfenden Bereichs in dem zu überprüfenden Gepäckstück im Detektor führt.

Diese Aufgabe wird durch einen erfindungsgemäßen Sekundärkollimator mit den Merkmalen des Patentanspruchs 1 gelöst. Durch die Anordnung von horizontalen und vertikalen Lamellen in einem rechteckigen Gitter, die zu einer Kollimatoreinheit zusammengefasst sind, wird eine sehr kompakte und gleichzeitig steife Form für den Sekundärkollimator erreicht. Durch die fächerförmige Ausbildung der horizontalen Lamellen und die parallele Ausbildung der vertikalen Lamellen, die um einen vorgebbaren Streuwinkel zur Transmissionsrichtung geneigt sind, wird eine eindeutige Codierung eines zu untersuchenden Bereichs in einem zu untersuchenden Gepäckstück auf einen Detektor erreicht. Erfindungsgemäß ist auf einer robusten, steifen Grundplatte eine Anzahl von Metallblechen angeordnet, die gefaltete Flächen aufweisen, wobei jeweils aneinander angrenzende Flächen senkrecht aufeinander stehen und das erste Metallblech mit der Grundplatte fest verbunden ist sowie das zweite Metallblech mit dem ersten Metallblech fest verbunden ist und das jeweils nächste Metallblech mit dem vorhergehenden fest verbunden ist. Dadurch erhält man einen sehr stabilen und steifen Streukollimator, der gleichzeitig sehr präzise ist.

Unter einer horizontalen Lamelle wird im Rahmen dieser Anmeldung eine Lamelle verstanden, die senkrecht zur XZ-Ebene verläuft. Unter einer vertikalen Lamelle wird deswegen eine Lamelle verstanden, die senkrecht zur YZ-Ebene verläuft. Die beiden Bezeichnungen als "horizontal" beziehungsweise "vertikal" sind willkürlich gewählt, da die XZ-Ebene nicht zwangsläufig in der Vertikalen verläuft und die YZ-Ebene nicht zwangsläufig in der Horizontalen. Dies hängt unter anderem auch vom Einbau der Röntgenstreuvorrichtung ab.

Eine vorteilhafte Weiterbildung sieht vor, dass die Lamellen aus einem Röntgenstrahlen absorbierenden Material sind, insbesondere aus Stahl, und eine Dicke von unter 1 mm, insbesondere ca. 100 *µ*m, aufweisen. Dadurch wird gewährleistet, dass lediglich die Streustrahlung von dem zu untersuchenden Bereich des zu untersuchenden Gepäckstücks auf den Detektor trifft, auf den das jeweilige Detektorelement codiert ist.

Eine weitere vorteilhafte Weiterbildung sieht vor, dass das rechteckige Gitter am Röntgenquellen-fernen Ende in Richtung der vertikalen Lamellen eine Breite von 1 - 10 mm und in Richtung der horizontalen Lamellen eine Höhe von 0,5 - 2,5 mm pro Gitterelement aufweist. Dadurch wird erreicht, dass jedes Gitterelement des Sekundärkollimators an seinem Detektor-seitigen Ende einem Element des Detektorfeldes von der Größe her entspricht und somit eine eindeutige Zuordnung der durch das jeweilige Gitterelement durchtretenden Streustrahlung gegeben ist.

Eine weitere vorteilhafte Weiterbildung sieht vor, dass die Kollimatoreinheit an ihrem Röntgenquellen-fernen Ende in Richtung der vertikalen Lamellen eine Breite von insgesamt 350 mm und gleichzeitig an ihrem Röntgenquellen-nahen Ende in Richtung der vertikalen Lamellen eine Breite von insgesamt 228 mm sowie zur Röntgenquelle hin eine Höhe von insgesamt 250 mm aufweist und einen Öffnungswinkel von 12° besitzt. Mit einer solchen Kollimatoreinheit wird ein Modul geschaffen, welches bei einem normalen Fächerstrahl mit einem Öffnungswinkel von 60° genau fünfmal eingesetzt werden kann. Damit ist je nach Anwendungsfall eine vollständige Abdeckung des gesamten Öffnungswinkels des Fächerstrahls möglich oder auch nur ein Teilbereich.

Eine weitere vorteilhafte Weiterbildung sieht vor, dass die Kollimatoreinheit in einem lotrechten Stahlcontainer angeordnet ist. Dadurch ist es möglich, wenn zwei oder mehrere Kollimatoreinheiten als Module nebeneinander angeordnet werden, eine sehr präzise Ausrichtung zueinander zu erzielen.

Eine weitere vorteilhafte Weiterbildung sieht vor, dass fünf Kollimatoreinheiten aneinandergefügt sind, die einen gesamten Öffnungswinkel von 60° aufweisen. Dadurch wird der gesamte Öffnungswinkelbereich des Fächerstrahls der Röntgenquelle abgedeckt und eine Verschwenkung des Streukollimators in Verbindung mit dem Detektor muss nicht vorgenommen werden, um das zu untersuchende Gepäckstück in einem Durchlauf überprüfen zu können.

Eine weitere vorteilhafte Weiterbildung sieht vor, dass insgesamt 18 Metallbleche auf der Grundplatte angeordnet sind. Durch die Verwendung von insgesamt 18 Metallblechen wird eine Kolllimatoreinheit geschaffen, die sich über die gesamte Länge des Detektorfeldes erstreckt.

Eine weitere vorteilhafte Weiterbildung sieht vor, dass an dem der Grundplatte entgegengesetzten Ende das Metallblech fest mit einer robusten, steifen Deckplatte verbunden ist. Durch die Verwendung einer Deckplatte wird eine noch höhere Steifigkeit der Kollimatoreinheit erreicht.

Darüber hinaus wird die Aufgabe durch eine erfindungsgemäße Röntgenstrenvorrichtung mit den Merkmalen des Patentanspruchs 8 gelöst.

Eine vorteilhafte Weiterbildung der Röntgenstreuvorrichtung sieht vor, dass zusätzlich ein Transmissionsdetektor in gerader Verlängerung von der Röntgenquelle über den zu untersuchenden Bereich des Gepäckstücks angeordnet ist. Dadurch ist es möglich, dass abgeschirmte Bereiche in dem zu untersuchenden Gepäckstück erkannt werden, eine Korrektur der Dämpfungseffekte bezüglich Streudaten erfolgen kann und ein Pre-Scan-Durchleuchtungsbild des zu untersuchenden Gepäckstücks erhalten wird.

Eine weitere vorteilhafte Weiterbildung der Röntgenstreuvorrichtung sieht vor, dass der Sekundärkollimator in vertikaler Richtung parallel zum Fächerstrahl ausgerichtet ist und in horizontaler Richtung auf den zu untersuchenden Bereich des Gepäckstücks ausgerichtet ist. Dadurch ist es möglich, das zu untersuchende Gepäckstück ohne eine Verschwenkung oder Axialbewegung des Sekundärkollimators und des Detektorfeldes zu untersuchen, wenn das zu untersuchende Gepäckstück über ein Förderband zwischen dem Primärkollimator und dem Sekundärkollimator bewegt wird.

Vorteilhafte Ausgestaltungen der Erfindung werden weiter anhand der Zeichnungen erläutert. Im Einzelnen zeigen:
- Fig. 1: Eine schematische perspektivische Ansicht einer erfindungsgemäßen Röntgenstreuvorrichtung ohne Primärkollimator und Sekundärkollimator,
- Fig. 2: einen Ausschnitt eines Schnitts durch die Röntgenstreuvorrichtung gemäß Fig. 1 in der YZ-Ebene mit Sekundärkollimator und einem Teil des Detektorfeldes,
- Fig. 3: einen Ausschnitt eines Schnitts durch die Röntgenstrahlvorrichtung gemäß Fig.1 entlang der XZ-Ebene mit teilweise dargestelltem Streukollimator und
- Fig. 4: eine schematische Darstellung eines teilweise zusammengesetzten Sekundäkollimators.

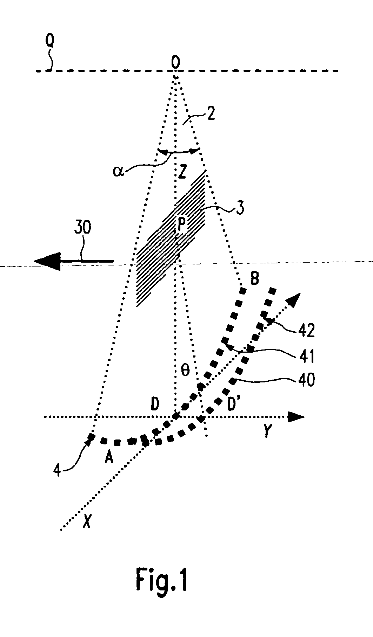

In Fig. 1 ist eine perspektivische Ansicht einer schematisch dargestellten Röntgenstreuvorrichtung wiedergegeben, in der jedoch insbesondere ein Primärkollimator und ein Sekundärkollimator 1 der Übersichtlichkeit wegen weggelassen wurden.

Von einer Röntgenquelle O wird mittels eines Primärkollimators (nicht gezeigt) ein Fächerstrahl 2 erzeugt. Der schlitzförmige Primärkollimator ist aus einem Material, das Röntgenstrahlen stark absorbiert, beispielsweise aus Kupfer oder einer Bleiverbindung. Als Röntgenquelle O wird eine Elektronenbremsstrahlungsquelle im Hochleistungsbereich (beispielsweise 15 kW) und mittlerer Spannung (beispielsweise 180 kV) verwendet. Als Primärkollimator wird ein Spaltkollimator verwendet, der lediglich einen dünnen Fächerstrahl 2 auf das zu untersuchende Gepäckstück 3 durchlässt. Sowohl die Röntgenquelle O als auch der Primärkollimator sind prinzipiell bekannt und nicht erfindungswesentlich, so dass im Weiteren auf ihre nähere Ausgestaltung nicht eingegangen wird.

Sämtliche Hauptkomponenten der Vorrichtung sind rotationssymmetrisch zur angegebenen Achse Q. Der durch den Primärkollimator durchgelassene Fächerstrahl 2 hat einen Öffnungswinkel α von 60° und eine Dicke in Y-Richtung von circa 1 mm.

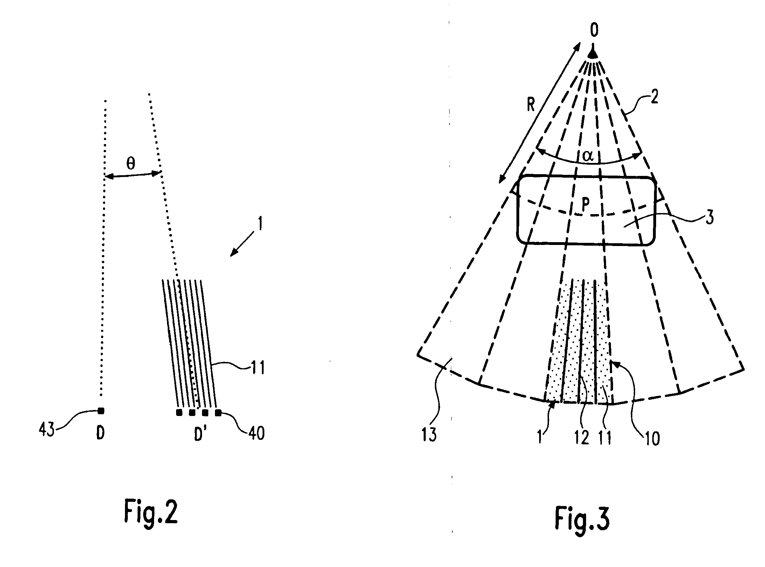

Stellvertretend für alle Streupunkte eines zu untersuchenden Gepäckstücks 3 innerhalb des Fächerstrahls 2 ist der Streupunkt P dargestellt. Durch die Röntgenquelle O und den Streupunkt P wird die Z-Achse definiert. Die entlang der Z-Achse transmittierte Röntgenstrahlung trifft am Transmissionspunkt D auf einen Detektor 4 auf. Dieser Transmissionspunkt D definiert den Ursprung des kartesischen Koordinatensystems X, Y, Z. Die X-Achse wird dabei so definiert, dass sie parallel zur Ebene, in der sich der Öffnungswinkel α des Fächerstrahls 2 erstreckt, verläuft. Auf der senkrecht zur X-Achse und Z-Achse verlaufenden Y-Achse trifft ein Streustrahl auf ein weiteres Detektorelement 40 des Detektors 4. Die Codierung des Streupunktes P im Gepäckstück 3 auf den angegebenen Streustrahlpunkt D' erfolgt über die Geometrie des Sekundärkollimators 1, was unten zu den Figuren 2 und 3 beschrieben wird.

Der Streuwinkel Θ zwischen dem Transmissionspunkt D und dem Streustrahlpunkt D' verläuft in der YZ-Ebene.

Bei dem verwendeten Detektor 4 handelt es sich um einen Raumtemperaturhalbleiter, wie beispielsweise CdZnTe. Der Detektor 4 ist dabei als ein zweidimensional segmentiertes Detektorfeld ausgebildet. Aus Klarheitsgründen sind lediglich zwei Reihen von Detektorelementen 40 dargestellt. Eine erste Detektorreihe 41 verläuft in der XZ-Ebene durch den Transmissionspunkt D. Eine zweite Detektorreihe 42 von Detektorelementen 40 verläuft durch den Streustrahlpunkt D'. Die erste Detektorreihe 41 erstreckt sich in X-Richtung vom Anfangspunkt A bis zum Endpunkt B des Detektors 4. Diese beiden Punkte werden durch den Öffnungswinkel α des Fächerstrahls 2 festgelegt. Die Fläche des Streudetektors 4 ist segmentiert in Schritten von ungefähr 1,5 mm in Y-Richtung und ungefähr 2 mm in X-Richtung. Jedes einzelne Detektorelement 40 ist mit einer bekannten Analyseeinrichtung verbunden. Solche Vorrichtungen sind bekannt und nicht erfindungswesentlich, so dass auf deren näherer Ausgestaltung im Folgenden nicht eingegangen wird.

Die Größe des gesamten Detektorfeldes beträgt in seiner Höhe in X-Richtung circa 1755 mm und in seiner Breite in Y-Richtung circa 27 mm. Dadurch weist der Streudetektor 4 in X-Richtung 175 und in Y-Richtung 18 Segmente auf. Es ergibt sich somit eine Gesamtzahl von 3150 Detektorelementen 40. Mit einem solchen Streudetektor 4 kann ein Gepäckstück 3 mit einer Länge von 1000 mm in Y-Richtung in 5 Sekunden gescannt werden bei einer Datenaufnahmezeit von 5 ms pro gescannten Millimeter, wenn das Gepäckstück 3 entlang der Bewegungsrichtung 30 auf einem Förderband (nicht gezeigt) bewegt wird.

Es ist genauso gut möglich, den gesamten Streudetektor 4 mit seiner Unterteilung oder auch nur einen Teil desselben auf der anderen Seite der Fächerstrahlebene anzuordnen, so dass man eine Verdoppelung des detektierten Streusignals erhält.

Das Signal in einem Transmissionsdetektor 43, der sich am Transmissionspunkt D befindet, wird zur Überprüfung einer Abschirmung im Bereich um den Streupunkt P im Gepäckstück 3 verwendet. Das erhaltene Transmissionssignal kann auch dafür verwendet werden, die Dämpfungseffekte der Streudaten zu korrigieren und ein Pre-Scan-Durchleuchtungsbild des Gepäckstücks 3 zu erhalten.

In den Figuren 2, 3 und 4 ist der Sekundärkollimator 1 gezeigt, der im Folgenden näher beschrieben wird. Er codiert den Winkel, unter dem der Streupunkt P, bezogen auf den Öffnungswinkel α, angeordnet ist, auf die X-Koordinate des Detektorfeldes 40 und den Abstand R des Streupunktes P von der Röntgenquelle O auf die Y-Koordinate des Detektorfeldes 40. Dabei lässt er lediglich Streustrahlungen aus einem schmalen Winkelbereich um den Streuwinkel Θ herum in den Detektor 4 gelangt. Dies wird aufgrund seiner Geometrie, wie in den Figuren 2 und 3 dargestellt ist, erreicht.

Fig. 2 zeigt einen Schnitt entlang der YZ-Ebene durch den Sekundärkollimator 1. Es sind vertikale Lamellen 11 zu erkennen, die parallel zueinander verlaufen. Diese vertikalen Lamellen 11 stehen senkrecht auf die YZ-Ebene und sind um den Streuwinkel Θ gegen die Z-Achse geneigt angeordnet. Sie sind aus einem absorbierenden Material, beispielsweise aus Stahl, und weisen eine Dicke von circa 100 *µ*m auf. Benachbarte vertikale Lamellen 11 sind 1,5 mm voneinander beabstandet, was der Breite eines Detektorelements 40 in Y-Richtung entspricht.

In Fig. 3 ist ein Schnitt entlang der XZ-Ebene dargestellt. Diese Ebene enthält den Punkt, an dem die Röntgenquelle O angeordnet ist, sowie den Anfangspunkt A und den Endpunkt B des Detektors 4. Senkrecht zu der dargestellten Ebene verlaufen horizontale Lamellen 12, die eine Höhe (senkrecht zur dargestellten Ebene) von 1,5 mm (wie dies oben zu Fig. 2 beschrieben ist) und eine Breite von ungefähr 2 mm am Detektor 4 (nicht dargestellt), was der Breite eines einzelnen Detektorelements 40 entspricht. Die durch die vertikalen Lamellen 11 und die horizontalen Lamellen 12 gebildeten Spalten verjüngen sich in Richtung der Röntgenquelle O. Die horizontalen Lamellen 12 sind dabei so ausgerichtet, dass sie alle auf die Röntgenquelle O weisen.

Die Spalten sind in insgesamt 5 Module 13 des Sekundärkollimators 1 unterteilt. Jedes Modul 13 ist als Fächersegment ausgebildet und hat einen Öffnungswinkel von 12°, so dass sich bei einer direkt anschließenden Anordnung der 5 Module 13 als gesamter Öffnungswinkel die 60° des Öffnungswinkels α des Fächerstrahls 2 ergibt. Ein Modul 13 hat eine Ausdehnung von 27 mm in Y-Richtung und 350 mm am Detektor in X-Richtung beziehungsweise 228 mm in X-Richtung direkt unterhalb des Förderbands (nicht gezeigt) auf dem das zu überprüfende Gepäckstück 3 liegt. Jedes Modul 13 ist zu einer Kollimatoreinheit 10 zusammengefasst und in einem lotrechten Stahlcontainer angeordnet, so dass bei einer präzisen Aneinanderfügung der Module 13 sich automatisch eine Genauigkeit von 30 *µ*m für die Spalten des Sekundärkollimators 1 ergibt.

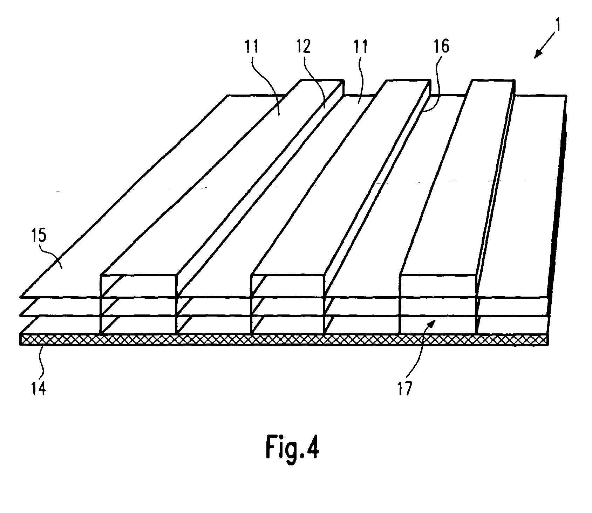

In Figur 4 ist ein noch nicht fertig produzierter Streukollimator 1 dargestellt. Anhand dieser Figur kann gut die Fertigungsmethode eines Moduls 13 eines Sekundärkollimators 1 geschildert werden.

Auf einer robusten und steifen Grundplatte 14 ist ein erstes Metallblech 15 angeordnet. Das erste Metallblech 15 wird mittels eines bekannten Verbindungsverfahrens, beispielsweise durch Verkleben oder Punktschweißen fest mit der Grundplatte 14 verbunden. Das Metallblech 15 wurde vorher mittels eines traditionellen Metallverarbeitungsverfahren vorgeformt. Dabei ist das Metallblech 15 so geformt worden, dass immer abwechselnd jeweils unter 90° zueinander stehende vertikale Lamellen 11 und horizontale Lamellen 12 ausgebildet sind. Diese sind jeweils über eine gerade Falzkante 16 miteinander verbunden. Es ist gut zu erkennen, dass die vertikalen Lamellen 11 in zwei zueinander parallelen Ebenen verlaufen, wobei immer abwechselnd eine vertikale Lamelle 11 in der oberen Ebene und danach in der unteren Ebene liegt. Dagegen verlaufen die horizontalen Lamellen 12 nicht parallel zueinander sondern konvergieren auf die Röntgenquelle O (nicht gezeigt).

Während des Verbindungsschritts wird das vorgeformte Metallblech 15 mittels einer Schablone, die aus "Gabeln" gebildet ist, welche in die Spalten 17 eingeführt sind, exakt fixiert.

Im nächsten Schritt wird ein identisch vorgeformtes Metallblech 15 präzise über dem zuletzt befestigten Metallblech 15 angeordnet und mittels der vorbeschriebenen Schablone während des Verbindens genau an dieser Stelle gehalten und mittels einer der vorgenannten Verbindungsverfahren mit dem darunter angebrachten Metallblech 15 fest verbunden. Diese Methode wird wiederholt, bis alle Metallbleche 15 präzise übereinander angeordnet sind. Regelmäßig werden hierbei 18 Metallbleche 15 übereinander angeordnet, damit die Anzahl der Segmente des Detektors 4 in Y-Richtung erreicht wird. Auf das oberste Metallblech 15 wird eine Deckplatte (nicht gezeigt) aufgebracht und mit diesem Metallblech 15 wie die Grundplatte 14 mit dem ersten Metallblech 15 verbunden. Damit erhält man eine zweidimensionale Rasterstruktur der Metallbleche 15, durch die das gesamte Modul 13 sogar unter seinem eigenem Gewicht stabil ist.

Neben der beschriebenen Möglichkeit, ein Gepäckstück 3 über die gesamte Breite des Fächerstrahls 2 zu analysieren, ist es genauso möglich, lediglich ein Modul 13 in der Röntgenstreuvorrichtung vorzusehen. Dann wird lediglich ein Öffnungswinkel von 12° durch den Sekundärkollimator 1 und das Detektorfeld 40 beobachtet. Dies reduziert zwar die Kosten der Röntgenstreuvorrichtung erheblich, jedoch um den Preis einer geringeren Prüfgeschwindigkeit. In diesem Fall muss die Vorrichtung um den Punkt, der durch die Röntgenquelle O definiert wird, entweder in der Richtung des Öffnungswinkels α verschwenkt werden oder senkrecht hierzu, um die fehlenden Abschnitte des primären Fächerstrahls 2 zu simulieren.

Zusammenfassend kann gesagt werden, dass durch einen erfindungsgemäßen Sekundärkollimator 1 der Winkel des Streupunktes P auf die X-Koordinate des Detektorfelds 40 abgebildet wird und der Abstand R des Streupunktes P von der Röntgenquelle O auf die X-Koordinate des Detektorfeldes 40 abgebildet wird. Hierbei lässt der Sekundärkollimator 1 nur einen kleinen Winkelbereich um den Streuwinkel Θ in den Detektor 4 fallen. Ein erfindungsgemäßer Sekundärkollimator 1 ist dabei gleichzeitig mechanisch äußerst stabil, was zu einem hochpräzisen XRD-Profil führt. Darüber hinaus ist der erfindungsgemäße Sekundärkollimator 1 sehr einfach herzustellen und von modularem Aufbau. Es kann somit durch die Wahl der Anzahl der verwendeten Module 13 eine Anpassung an die zur Verfügung stehenden finanziellen Mittel erfolgen, wobei die Anzahl der verwendeten Module 13 in direktem Zusammenhang mit der Prüfgeschwindigkeit des Gepäckstücks 3 steht.

### Bezugszeichenliste

- 1: Sekundärkollimator
- 2: Fächerstrahl
- 3: Gepäckstück
- 4: Detektor
- 10: Kollimatoreinheit
- 11: vertikale Lamelle
- 12: horizontale Lamelle
- 13: Modul
- 14: Grundplatte
- 15: Metallblech
- 16: Falzkante
- 17: Spalte
- 30: Bewegungsrichtung
- 40: Detektorelement
- 41: erste Detektorreihe
- 42: zweite Detektorreihe
- 43: Transmissionsdetektor
- A,B: Anfangs-, Endpunkt des Detektors
- D: Transmissionspunkt
- D': Streustrahlpunkt
- O: Röntgenquelle
- P: Streupunkt
- Q: Achse
- R: Abstand
- α: Öffnungswinkel
- Θ: Streuwinkel

## Patentansprüche

1. Sekundärkollimator (1) - für eine Röntgenstreuvorrichtung - mit horizontalen Lamellen (12) und senkrecht dazu angeordneten vertikalen Lamellen (11), wobei die vertikalen Lamellen (11) parallel zueinander angeordnet sind und um einen vorgegebenen Streuwinkel (Θ) zu einer Transmissionsrichtung eines Röntgenstrahls geneigt sind, und wobei die horizontalen Lamellen (12) fächerförmig auf einen einzigen Punkt, nämlich in Einbaulage des Sekundärkollimators (1) zu einer Röntgenquelle (O) hin, ausgerichtet sind, und die horizontalen Lamellen (12) mit den vertikalen Lamellen (11) ein rechteckiges Gitter bilden und in einer Kollimatoreinheit (10) zusammengefasst sind,
**dadurch gekennzeichnet, dass** auf einer robusten, steifen Grundplatte (14) eine Anzahl von Metallblechen (15) angeordnet ist, die gefaltete Flächen aufweisen, wobei jeweils aneinander angrenzende Flächen senkrecht aufeinander stehen und das erste Metallblech (15) mit der Grundplatte (14) fest verbunden ist sowie das zweite Metallblech (15) mit dem ersten Metallblech (15) fest verbunden ist und das jeweils nächste Metallblech (15) mit den vorhergehenden fest verbunden ist, wobei die Teile der Metallbleche (15), die parallel zur Grundplatte (14) ausgerichtet sind, die vertikalen Lamellen (11) bilden und die Teile der Metallbleche (15), die senkrecht zur Grundplatte (15) ausgerichtet sind, die horizontalen Lamellen (12) bilden.

2. Sekundärkollimator (1) nach Anspruch 1, **dadurch gekennzeichnet, dass** die Lamellen (11; 12) aus einem Röntgenstrahlen absorbierenden Material sind, insbesondere aus Stahl, und eine Dicke von unter 1 mm, insbesondere circa 100 µm, aufweisen.

3. Sekundärkollimator (1) nach einem der Ansprüche 1 oder 2, **dadurch gekennzeichnet, dass** das rechteckige Gitter an einem ersten Ende, das in Einbaulage des Sekundärkollimators (1) das Röntgenquellen-ferne Ende ist, in horizontaler Richtung eine Breite von 1 - 10 mm und in vertikaler Richtung eine Höhe von 0,5 - 2,5 mm pro Gitterelement aufweist.

4. Sekundärkollimator (1) nach einem der vorstehenden Ansprüche, **dadurch gekennzeichnet, dass** die Kollimatoreinheit (10) an dem ersten Ende, das in Einbaulage des Sekundärkollimators (1) das Röntgenquellen-ferne Ende ist, in Richtung der vertikalen Lamellen (11) eine Breite von insgesamt 350 mm und gleichzeitig an einem zweiten Ende, das in Einbaulage des Sekundärkollimators (1) das Röntgenquellen-nahe Ende ist, in Richtung der vertikalen Lamellen (11) eine Breite von insgesamt 228 mm sowie zur Röntgenquelle (O) hin eine Höhe von insgesamt 250 mm aufweist und einen Öffnungswinkel (α) von 12° besitzt.

5. Sekundärkollimator (1) nach einem der vorstehenden Ansprüche, **dadurch gekennzeichnet, dass** fünf Kollimatoreinheiten (10) aneinandergefügt sind, die einen gesamten Öffnungswinkel (α) von 60° aufweisen.

6. Sekundärkollimator (1) nach einem der vorstehenden Ansprüche, **dadurch gekennzeichnet, dass** insgesamt 18 Metallbleche (15) auf der Grundplatte (14) angeordnet sind.

7. Sekundärkollimator (1) nach einem der vorstehenden Ansprüche, **dadurch gekennzeichnet, dass** an dem der Grund-platte (14) entgegengesetzten Ende des Sekundärkollimators das Metallblech (15) fest mit einer robusten, steifen Deckplatte verbunden ist.

8. Röntgenstreuvorrichtung zur Gepäckkontrolle mit einer Röntgenquelle (O), mit einem Primärkollimator, der nur einen Fächerstrahl (2) durchlässt, mit einem Sekundärkollimator (1) zur Abbildung eines zu untersuchenden Bereichs eines Gepäckstücks (3) und mit einem Streudetektor (4), wobei der Sekundärkollimator (1) zwischen dem zu untersuchenden Bereich des Gepäckstücks (3) und dem Streudetektor (4) angeordnet ist und nach einem der vorstehenden Ansprüche ausgebildet ist.

9. Röntgenstreuvorrichtung nach Anspruch 8, **dadurch gekennzeichnet, dass** zusätzlich ein Transmissionsdetektor (43) in gerader Verlängerung von der Röntgenquelle (O) über den zu untersuchenden Bereich des Gepäckstücks (3) angeordnet ist.

10. Röntgenstreuvorrichtung nach einem der Ansprüche 8 oder 9, **dadurch gekennzeichnet, dass** der Sekundärkollimator (1) in vertikaler Richtung, in der die vertikalen Lamellen (11) ausgerichtet sind, parallel zum Fächerstrahl (2) ausgerichtet ist und in zu horizontaler Richtung - in der die horizontalen Lamellen (12) ausgerichtet sind sowie zu vertikaler Richtung senkrechter Richtung auf den zu untersuchenden Bereich des Gepäckstücks (3) ausgerichtet ist.

## Claims

1. Secondary collimator (1) - for an X-ray scattering device - with horizontal plates (12) and vertical plates (11) arranged perpendicular thereto, the vertical plates (11) being arranged parallel to one another and inclined by a pre-determined scattering angle (Θ) relative to a transmission direction of an X-ray beam, and the horizontal plates (12) being aligned fan-shaped onto a single point, namely in the mounting position of the secondary collimator (1) onto an X-ray source (O), and the horizontal plates (12) forming a rectangular grid with the vertical plates (11) and being combined to form a collimator unit (10), **characterized in that** a number of metal sheets (15) which have folded surfaces is arranged on a robust, rigid base plate (14), each of the adjoining surfaces standing perpendicular on one another and the first metal sheet (15) being firmly connected to the base plate (14) and the second metal sheet (15) being firmly connected to the first metal sheet (15) and the next metal sheet (15) in each case being firmly connected to its predecessor, the parts of the metal sheets (15) which are aligned parallel to the base plate (14) forming the vertical plates (11) and the parts of the metal sheets (15) which are aligned perpendicular to the base plate (15) forming the horizontal plates (12).

2. Secondary collimator (1) according to claim 1, **characterized in that** the plates (11; 12) are made of an X-ray absorbing material, in particular steel, and are less than 1 mm, in particular approximately 100 µm, thick.

3. Secondary collimator (1) according to one of claims 1 or 2, **characterized in that**, at a first end, which in the mounting position of the secondary collimator (1) is the end remote from the X-ray source, the rectangular grid is 1 - 10 mm wide in horizontal direction and 0.5 - 2.5 mm high per grid element in vertical direction.

4. Secondary collimator (1) according to one of the preceding claims, **characterized in that**, at the first end, which in the mounting position of the secondary collimator (1) is the end remote from the X-ray source, the collimator unit (10) is 350 mm wide overall in the direction of the vertical plates (11) and at the same time, at the second end, which in the mounting position of the secondary collimator (1) is the end near the X-ray source, is 228 mm wide overall in the direction of the vertical plates (11) and, towards X-ray source (O), is 250 mm high overall and has an aperture (α) of 12°.

5. Secondary collimator (1) according to one of the preceding claims, **characterized in that** five collimator units (10) are joined together which have a total aperture (α) of 60°.

6. Secondary collimator (1) according to one of the preceding claims, **characterized in that** a total of 18 metal sheets (15) are arranged on the base plate (14).

7. Secondary collimator (1) according to one of the preceding claims, **characterized in that**, at the end of the secondary collimator opposite the base plate (14), the metal sheet (15) is firmly connected to a robust, rigid cover plate.

8. X-ray scattering device for baggage check with an X-ray source (O), with a primary collimator which only lets through a fan beam (2), with a secondary collimator (1) for projecting an area to be examined of an item of luggage (3) and with a scattering detector (4), the secondary collimator (1) being arranged between the area to be examined of the item of luggage (3) and the scattering detector (4) and being developed according to one of the preceding claims.

9. X-ray scattering device according to claim 8, **characterized in that** a transmission detector (43) is arranged additionally in straight extension from the X-ray source (O) over the area to be examined of the item of luggage (3).

10. X-ray scattering device according to one of claims 8 or 9, **characterized in that** the secondary collimator (1) is aligned in vertical direction, in which the vertical plates (11) are aligned, parallel to the fan beam (2) and is aligned in perpendicular direction to the horizontal direction - in which the horizontal plates (12) are aligned - as well as in perpendicular direction and to the vertical direction to the area to be examined of the item of luggage (3).

## Revendications

1. Collimateur secondaire (1) pour un dispositif à rayons X avec des lamelles horizontales (12) et des lamelles verticales (11) disposées perpendiculairement par rapport à celles-ci, les lamelles verticales (11) étant disposées parallèlement entre elles et étant inclinées d'un angle de diffusion (Θ) prédéfini par rapport à une direction de transmission d'un rayon X, et les lamelles horizontales (12) étant orientées sur un point unique, notamment vers une source de rayons X (O), dans la position de montage du collimateur secondaire (1), et les lamelles horizontales (12) formant avec les lamelles verticales (11) un quadrillage à angle droit et étant intégrées dans une unité de collimateur (10),
**caractérisé en ce qu'**un certain nombre de tôles métalliques (15) sont disposées sur une plaque de base (14) rigide, solide présentant des surfaces pliées, chaque surface se jouxtant respectivement étant perpendiculaire aux autres et la première tôle métallique (15) étant reliée fixement à la plaque de base (14) et la deuxième tôle métallique (15) étant reliée fixement à la première tôle métallique (15) et la tôle métallique (15) respective suivante étant reliée fixement à la précédente, les parties des tôles métalliques (15) orientées parallèlement à la plaque de base (14) formant les lamelles verticales (11) et les parties des tôles métalliques (15) orientées de façon perpendiculaire à la plaque de base (15) formant les lamelles horizontales (12).

2. Collimateur secondaire (1) selon la revendication 1, **caractérisé en ce que** les lamelles (11 ; 12) sont fabriquées à partir d'un matériau absorbant les rayons X, notamment en acier, et présentent une épaisseur inférieure à 1 mm, notamment d'environ 100 µm.

3. Collimateur secondaire (1) selon l'une quelconque des revendications 1 ou 2, **caractérisé en ce que** le quadrillage à angle droit présente au niveau d'une première extrémité, correspondant en position de montage du collimateur secondaire (1) à l'extrémité éloignée des sources de rayons, X, une largeur de 1 - 10 mm dans la direction horizontale, et dans la direction verticale une hauteur de 0,5 - 2,5 mm par élément de quadrillage.

4. Collimateur secondaire (1) selon l'une quelconque des revendications précédentes, **caractérisé en ce que** l'unité de collimateur (10) présente au niveau de la première extrémité, correspondant dans la position de montage du collimateur secondaire (1) à l'extrémité éloignée des sources de rayons X, une largeur globale de 350 mm en direction des lamelles verticales (11) tout en présentant au niveau d'une seconde extrémité, correspondant en position de montage du collimateur secondaire (1) à l'extrémité proche des sources de rayons X, une largeur globale de 228 mm en direction des lamelles verticales (11) ainsi qu'en direction de la source de rayons X (O) une hauteur totale de 250 mm et possède un angle d'ouverture (α) de 12°.

5. Collimateur secondaire (1) selon l'une quelconque des revendications précédentes, **caractérisé en ce que** cinq unités de collimateur (10) sont insérées les unes à côté des autres et **en ce qu'**elles présentent un angle d'ouverture (α) total de 60°.

6. Collimateur secondaire (1) selon l'une quelconque des revendications précédentes, **caractérisé en ce que** 18 tôles métalliques (15) au total sont disposées sur la plaque de base (14).

7. Collimateur secondaire (1) selon l'une quelconque des revendications précédentes, **caractérisé en ce que** la tôle métallique (15) est reliée fixement à une plaque de recouvrement rigide, solide au niveau de l'extrémité du collimateur secondaire opposée à la plaque de base (14).

8. Dispositif à rayons X diffusés destiné au contrôle des bagages à l'aide d'une source de rayons X (O), avec un collimateur primaire ne laissant passer qu'un faisceau en éventail (2), avec un collimateur secondaire (1) pour reproduire une zone de bagage (3) à examiner et avec un détecteur de diffusion (4), le collimateur secondaire (1) étant disposé entre la zone du bagage (3) à examiner et le détecteur de diffusion (4) et étant réalisé selon l'une quelconque des revendications précédentes.

9. Dispositif à rayons X diffusés selon la revendication 8, **caractérisé en ce qu'**un détecteur de transmission (43) est disposé en plus dans le prolongement rectiligne de la source de rayons X (O) au-dessus de la zone du bagage (3) à examiner.

10. Dispositif à rayons X diffusés selon l'une quelconque des revendications 8 ou 9, **caractérisé en ce que** le collimateur secondaire (1) est orienté dans la direction verticale dans laquelle les lamelles verticales (11) sont orientées, parallèlement au faisceau en éventail (2), et est orienté dans la direction horizontale dans laquelle les lamelles horizontales (12) sont orientées ainsi que dans la direction perpendiculaire à la direction verticale sur la zone du bagage (3) à examiner.
